# EUROPEAN PATENT APPLICATION

(11) **EP 4 687 241 A1**
(43) Date of publication of application: **04.02.2026**
(21) Application number: 24191963.8
(22) Date of filing: 31.07.2024
(51) Int. Cl.: H02H 1/00, H02H 9/00, H02H 7/04, H02H 7/26

(54) **CURRENT LIMITING SYSTEM, POWER DISTRIBUTION SYSTEM, AND METHOD FOR CONTROLLING A POWER DISTRIBUTION SYSTEM**

(71) Applicant: Hitachi Energy Ltd, 8050 Zürich (CH)
(72) Inventor: Sao, Charles, Morrisville, North Carolina 27560 (US); Maibach, Philippe, 5037 Muhen (CH); Noisette, Philippe, 1228 Plan-les-Ouates (CH)
(74) Representative: Epping - Hermann - Fischer

(57) **Abstract**

A current limiting system (7) for connecting a source (2) to at least two loads (4) by a power connection bus (6) and at least two feeders (13) is specified, comprising
- at least one current limiting device (8),
- an input line (9) connected to the current limiting device (8), and
- at least two output lines (11), each being connected to the current limiting device (8), wherein
- the input line (9) comprises a switch (10),
- each of the output lines (11) comprises a further switch (12),
- the input line (9) is configured to connect the power connection bus (6) and the current limiting device (8), and
- each of the output lines (11) is configured to be connected to one of the feeders (13) between a circuit breaker (14) and a primary side (15) of a transformer (17) of the corresponding feeder (13).

Furthermore, a power distribution system (1) and a method for controlling a power distribution system (1) are specified.

Fig. 1

## Description

The present disclosure relates to a current limiting system, a power distribution system, and a method for controlling a power distribution system.

A typical power distribution system connected to downstream transformers of a respective feeder has to energize a respective downstream transformer and/or feeder cable at full voltage when supplying multiple loads, such that each feeder has to be provided with typical inrush current limiting devices, such as pre-magnetizing resistors.

Embodiments of the disclosure relate to a current limiting system which is particularly simple. Further embodiments relate to a power distribution system and a method for controlling a power distribution system comprising such a current limiting system.

This is achieved by the subject-matter of the independent claims. Further embodiments are specified in the dependent claims and the following description.

A current limiting system for connecting a source to at least two loads by a power connection bus and at least two feeders is described. Exemplarily, the source is connected to the power connection bus. In particular, at least one source is connected to the power connection bus. The source, particularly each source, is connected to the power connection bus by a circuit breaker.

The source is configured to provide an electrical power, e.g. an alternating current, AC, to the power connection bus. The source is, for example, an energy grid. Exemplarily, the source can comprise at least one power plant for generating the electrical power. The electrical power is, exemplarily, provided to the power connection bus by the energy grid.

Exemplarily, the power plant is a hydrogen power generator. In particular, the more than one source is connected to the power connection bus, wherein at least some of the sources are hydrogen power generators. Each hydrogen power generator comprises, for example, a plurality of fuel cells, each configured to generate electrical power. Each of the hydrogen power generators comprises a direct current, DC, alternating current, AC, converter, inverter and a transformer. Each transformer is connected to the power connection bus via a circuit breaker. In particular, the hydrogen power generators are connected in parallel to the power connection bus, which is connected to the feeders.

Exemplary, each of the two feeders is separately connected to the power connection bus. Each of the feeders is, for example, connected to the respective load. In particular, the electrical power is provided from the source via the power connection bus and the respective feeder to the respective load.

According to an embodiment, the current limiting system comprises at least one current limiting device. The current limiting system is configured, for example, to prevent a flow of excessive current from the source to the loads, particularly during short circuits, overload currents, and/or inrush currents. Exemplarily, the current limiting device is configured to limit an inrush current when the source is connected to the respective load.

According to the embodiment, the current limiting system comprises an input line connected to the current limiting device. Exemplarily, the input line is directly connected to the current limiting device. The input line is configured to provide the electrical power from the power connection bus to the current limiting device.

According to the embodiment, the current limiting system comprises at least two output lines, each being connected to the current limiting device. Exemplarily, each of the output lines is directly connected to the current limiting device. Each output line is configured to provide the electrical power from the power connection bus to the respective feeder.

According to the embodiment of the current limiting system, the input line comprises a switch. The switch can be operated to be in a first state being characteristic of preventing a current flow, particularly between the power connection bus and the current limiting device. The switch can be operated to be in a second state being characteristic of allowing a current flow, particularly between the power connection bus and the current limiting device.

According to the embodiment of the current limiting system, each of the output lines comprises a further switch. Each further switch can be operated to be in a first state being characteristic of preventing a current flow, particularly between the current limiting device and the respective feeder. Each further switch can be operated to be in a second state being characteristic of allowing a current flow, particularly between the current limiting device and the respective feeder. Exemplarily, the further switches are operated individually and independently from one another.

For example, each of the further switches comprises or consists of a mechanical switch. Exemplarily, the mechanical switch is configured to be operated to physically make or break an electrically conductive connection by operating a contactor to be in the first state or the second state.

According to the embodiment of the current limiting system, the input line is configured to connect the power connection bus and the current limiting device. In particular, the power connection bus and the current limiting device are electrically conductively connected via the input line dependent on the state of the switch. If the switch is in the first state, the power connection bus and the current limiting device are not electrically conductively connected, and if the switch is in the second state, the power connection bus and the current limiting device are electrically conductively connected to one another.

According to the embodiment of the current limiting system, each of the output lines is configured to be connected to one of the feeders between a circuit breaker and a primary side of a transformer of the corresponding feeder. In particular, each circuit breaker can be operated to be in a first state being characteristic of preventing a current flow, particularly between the power connection bus and the respective transformer. Each circuit breaker can be operated to be in a second state being characteristic of allowing a current flow, particularly between the power connection bus and the respective transformer.

Exemplarily, each feeder comprises a transformer. Each transformer comprises, for example, a primary side and a secondary side. For example, the primary side faces the power connection bus, particularly the source, and the secondary side faces the load.

For example, the primary side comprises a primary winding. The primary winding is in particular configured to receive the electrical power from the power connection bus. In particular, the primary winding is configured for generating a magnetic field in a core of the transformer when the electrical power is applied.

For example, the secondary side comprises a secondary winding being coupled to the primary winding. The secondary winding is in particular configured to provide transformed electrical power to the load. In particular, the secondary winding is configured for generating the transformed electrical power dependent on the magnetic field generated by the primary winding.

Alternatively, at least one, at least some or each of the output lines is configured to be connected to one of the feeders between a circuit breaker and an induction motor, which is connected to a power receiving end of a feeder cable of the corresponding feeder.

Typically, when a transformer is initially supplied with electrical power, i.e. is energized, the respective transformer is configured to draw a comparatively large initial current, which is the inrush current. The inrush current occurs, in particular, due to the magnetization of the core of the transformer. The inrush current is in particular several times higher than a normal operating current of the respective transformer, which might lead to damages.

Advantageously, a current limiting system as described herein can limit an inrush current of any of the multiple transformers of the feeders using a current limiting device and a set of further switches, particularly a set of mechanical switches.

In particular, the current limiting device is connected to the respective feeder through the further switch, and this further switch needs only a making capability and does not need a breaking capability. The current limiting device gets connected on the primary side of the transformers, which means that the proposed configuration avoids the need for multiple inrush current limiting devices or additional parts for the same current limiting device, for different secondary distribution voltages.

Particularly, the use of further switches being particularly mechanical switches with only a making capability to connect the current limiting device to multiple feeders and hence multiple downstream transformers irrespective of the secondary distribution voltages allows the feeders to be energized one after the other.

According to a further embodiment of the current limiting system, the current limiting system comprises exclusively one current limiting device. Advantageously, by the use of a single current limiting device, the current limiting system for multiple feeders is particularly cost saving.

According to a further embodiment of the current limiting system, the current limiting device is a magnetizing resistor.

The magnetizing resistor comprises or consists of a metal alloy, for example. The magnetizing resistor has a resistance value of at least 100 Q, for example. In particular, the resistance value is dependent on a rating of the transformers to be energized.

Exemplarily, the magnetizing resistor is connected in series with the respective transformers and the power connection bus.

Advantageously, using a magnetizing resistor, the current limiting system is particularly cost saving.

According to a further embodiment of the current limiting system, the current limiting device is a magnetizing transformer. The magnetizing transformer is in particular configured to provide a comparatively large leakage reactance for reducing the inrush current at the respective transformer of the respective feeder. Exemplarily, the magnetizing transformer has a rating, particularly a MVA/kVA rating, which is smaller, particularly by at least one magnitude, than a rating of the transformer, so that the leakage reactance of the magnetizing transformer is much larger than that of the transformer.

The magnetizing transformer exemplarily comprises a primary side, a core, and a secondary side, wherein the primary side is coupled to the secondary side by the core. Exemplarily, the primary side has a primary winding, and the secondary side has a secondary winding, wherein both the primary winding and the secondary winding can the same number of turns. This means, for example, that a turn ratio of the primary side and the secondary side is one. Particularly, the primary winding is connected to the power connection bus, and the secondary winding is connected to the respective feeder.

According to a further embodiment of the current limiting system, the current limiting device is a magnetizing reactor. The magnetizing reactor is in particular configured to introduce an inductive reactance to the electrical power for reducing the inrush current at the respective transformer of the respective feeder.

The magnetizing reactor exemplarily comprises a core material and a winding arranged around the core material. In particular, the number of winding turns and the core material of the magnetizing reactor are dependent on a rating of the transformers to be energized.

Exemplarily, the magnetizing reactor is connected in series with the respective transformers and the power connection bus.

According to a further embodiment of the current limiting system, the current limiting device is a power electronic converter. The power electronic converter exemplarily comprises at least one power semiconductor device. The power semiconductor device is configured to limit the inrush current. A rating of the power semiconductor device is exemplarily dependent on a rating of the transformers to be energized.

Advantageously, using a power electronic converter, the current limiting device can be operated particularly precisely.

According to a further embodiment of the current limiting system, the switch is a further circuit breaker. The further circuit breaker is configured to be automatically operated to be in the first state dependent on a predetermined value. The predetermined value is a predetermined current and/or a predetermined time interval, for example.

Exemplarily, the further circuit breaker is configured to be operated to be in the first state when the inrush current is below the predetermined current, being particularly a current threshold.

In particular, the further circuit breaker has a making capability and a breaking capability. Having a breaking capability means that the further circuit breaker can actively interrupt the electrically conductive connection between the current limiting device and the power connection bus. Having a making capability means that the further circuit breaker can actively form the electrically conductive connection between the current limiting device and the power connection bus.

According to a further embodiment of the current limiting system, each further switch is a contactor. This means the further switch is a mechanical switch particularly having the making capability. Advantageously, the use of such further switches is particularly cost saving.

A further embodiment relates to a power distribution system for connecting a source to at least two loads, in particular comprising a current limiting system described herein above. Therefore, the features as described in connection with the power distribution system are also applicable for the current limiting system and vice versa.

According to an embodiment, the power distribution system comprises a power connection bus configured to be connected to the source.

According to the embodiment, the power distribution system comprises at least two feeders, each configured to be connected to one of the respective loads, and each of the feeders being connected to the power connection bus by a circuit breaker.

Exemplarily, each output line is connected to the feeder between the respective circuit breaker and the respective transformer.

According to the embodiment, the power distribution system comprises a current limiting system with a current limiting device. The current limiting system comprises an input line connected to the current limiting device, and at least two output lines, each being connected to the current limiting device. The input line comprises a switch, and each of the output lines comprises a further switch.

According to the embodiment of the power distribution system, the input line connects the power connection bus and the current limiting device.

According to the embodiment of the power distribution system, each of the output lines is connected to one of the feeders between the circuit breaker and the primary side of the transformer of the corresponding feeder.

Alternatively, at least one, at least some or each of the output lines is connected to one of the feeders between the circuit breaker and an induction motor, which is connected to a power receiving end of a feeder cable of the corresponding feeder.

According to the embodiment of the power distribution system, a feeder cable of at least one of the feeders is connected to the primary side of the corresponding transformer. Each feeder exemplarily comprises one of the feeder cables. For example, at least one, at least some or all of the feeder cables are directly connected to the primary side of the corresponding transformer.

According to the embodiment of the power distribution system, a feeder cable of at least one of the feeders is connected to a secondary side of the corresponding transformer. For example, at least one, at least some or all of the feeder cables are directly connected to the secondary side of the corresponding transformer.

According to the embodiment of the power distribution system, at least one of the feeder cables has a length of at least 1 m and at most 10 km.

According to the embodiment of the power distribution system, the source is configured to be a public utility grid and/or a power electronic converter. Exemplarily, the public utility grid is part of the energy grid and/or the power electronic converter is part of a power plant and/or a power conversion system.

Exemplarily, the load is configured to be a marine vessel, a marine platform and/or an onshore power network.

A further embodiment relates to a method for controlling a power distribution system, in particular a power distribution system described herein above. Therefore, the features as described in connection with the method are also applicable for the power distribution system and vice versa.

According to an embodiment of the method, each circuit breaker, each further switch and the switch, in particular the circuit breakers of the feeders, the further switches of the output lines and the switch of the input line, are operated such that all circuit breakers, all further switches and the switch are in an opened state. Particularly, the opened state is the first state. In this stage, all the feeders are not connected directly or via the current limiting device to the power connection bus. Exemplarily, the circuit breaker of the source is in the operated in the second state, i.e. being closed.

According to the embodiment of the method, the current limiting device is connected to the power connection bus by closing the switch. In particular, the switch is operated to be in the second state.

According to the embodiment of the method, one of the feeders to be energized is connected to the current limiting device by closing the corresponding further switch. In particular, exclusively one further switch is operated to be in the second state corresponding to the feeder to be energized.

By closing the switch and the further switch, in particular operating the switch and the further switch to be in the second state, an electrically conductive connection is established between the power connection bus and the corresponding transformer exclusively via the current limiting device.

According to the embodiment of the method, the feeder to be energized is connected to the power connection bus by closing the corresponding circuit breaker, in particular after the further switch is operated to be in the second state.

By closing the circuit breaker of the corresponding feeder, in particular operating the circuit breaker to be in the second state, a direct electrically conductive connection is established between the power connection bus and the corresponding transformer.

According to the embodiment of the method, the feeder to be energized is disconnected from the current limiting device by opening the further switch. In particular, the further switch in the second state is operated to be in the first state. Exemplarily, the switch can be opened, e.g. can be operated to be in the first state.

The method steps disclosed herein before are particularly performed in the order indicated.

According to a further embodiment of the method, after disconnecting the feeder to be energized from the current limiting device, the current limiting device is disconnected from the power connection bus by opening the switch.

According to a further embodiment of the method, the feeder to be energized is connected to the power connection bus after a predetermined time delay by the circuit breaker of the respective feeder, after the feeder to be energized is connected to the current limiting device.

The predetermined time delay is at least 0.1 ms and at most 10 ms.

According to a further embodiment of the method, before connecting one of the feeders to be energized to the power connection bus by closing the corresponding circuit breaker of the feeder, , a synchronism and amplitude matching between waveforms is determined at the respective output line of the current limiting device and at the power connection bus.

The synchronism is, for example, characteristic of an alignment in terms of frequency, phase and/or amplitude of the waveform at the respective output line and the waveform at the power connection bus. In particular, the frequency, phase and/or amplitude are determined for each, the waveform at the respective output line and the waveform at the power connection bus, and, based on a difference of the determined frequencies, phases and/or amplitudes, the synchronism is determined.

According to a further embodiment of the method, a voltage amplitude, frequency and phase angle are adjusted at the respective output line dependent on the synchronism and amplitude matching for achieving synchronism with the voltage at the power connection bus. In particular, if necessary, a voltage phase angle is adjusted at the respective output line for achieving synchronism with the voltage at the power connection bus.

The accompanying Figures are included to provide a further understanding. In the Figures, elements of the same structure and/or functionality may be referenced by the same reference signs. It is to be understood that the embodiments shown in the Figures are illustrative representations and are not necessarily drawn to scale.

Figure 1 schematically shows a power distribution system with a current limiting system according to an exemplary embodiment.

Figure 2 schematically shows a method for operating a power distribution system according to an exemplary embodiment.

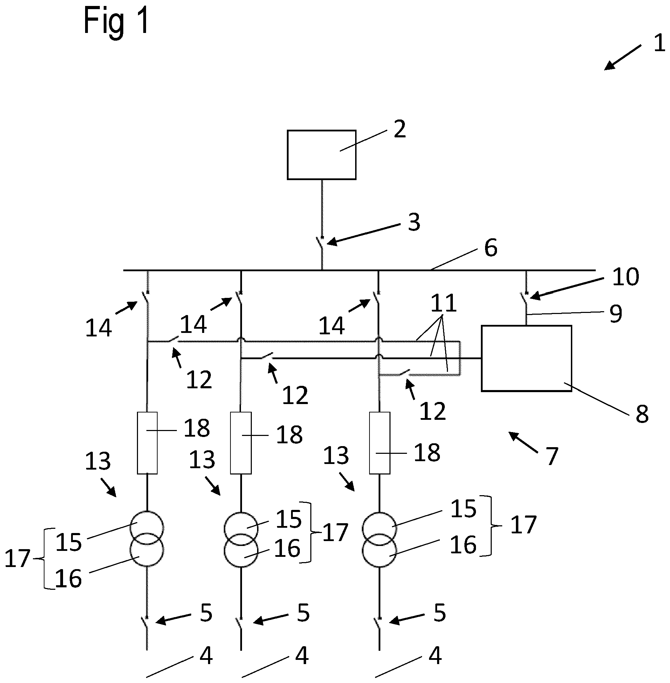

The power distribution system 1 according to the exemplary embodiment of Figure 1 is configured to connect a source 2 to at least two loads 4, particularly three loads 4. The power distribution system 1 comprises a power connection bus 6 configured to be connected to the source 2. The power connection bus 6 is configured to be connected to the source 2 via a circuit breaker 3 of the source 2.

The power distribution system 1 further comprises at least two, particularly three feeders 13. Each feeder 13 is configured to be connected to one of the respective loads 4. Each feeder 13 is configured to be connected to the respective load 4 via a circuit breaker 5 of the load 4.

Each feeder 13 comprises a circuit breaker 14, a transformer 17 and a feeder cable 18. Each feeder 13 is connected to the power connection bus 6 by the respective circuit breaker 14. Each transformer 17 comprises a primary side 15 with a primary winding and a secondary side 16 with a secondary winding. The primary side 15 faces the power connection bus 6, and the secondary side 16 faces the load 4.

The power distribution system 1 comprises a current limiting system 7 comprising a current limiting device 8. The current limiting device 8 is one of a magnetizing resistor, a magnetizing transformer, a magnetizing reactor or a power electronic converter.

The current limiting system 7 further comprises an input line 9 and at least two, particularly three output lines 11. The input line 9 comprises a switch 10, and each of the output lines 11 comprises a further switch 12. The switch 10 is particularly a further circuit breaker, and the further switch 12 is particularly a mechanical switch.

The input line 9 connects the current limiting device 8 with the power connection bus 6. If the switch 10 is opened, e.g. in a first state, the current limiting device 8 and the power connection bus 6 are not electrically conductively connected via the input line 9. If the switch 10 is closed, e.g. in a second state, the current limiting device 8 and the power connection bus 6 are electrically conductively connected via the input line 9.

Each output line 11 connects the current limiting device 8 with one of the feeders 13. If the further switch 12 is opened, e.g. in a first state, the current limiting device 8 and the respective feeder 13 are not electrically conductively connected via the respective output line 11. If the further switch 12 is closed, e.g. in a second state, the current limiting device 8 and the respective feeder 13 are electrically conductively connected via the respective output line 11.

In particular, exclusively one further switch 12 is closed at a time for energizing the respective load 4 connected to the respective feeder 13. During this time, the other further switches 12 are open.

Each of the output lines 11 is connected to the respective feeder 13 between the circuit breaker 14 of the feeder 13 and the primary side 15 of the corresponding transformer 17 of the corresponding feeder 13. In particular, in Figure 1, each of the output lines 11 is connected to the respective feeder 13 between the circuit breaker 14 of the feeder 13 and the feeder cable 18. This means that the output lines 11 are directly adjacent to the circuit breaker 14 of the feeder 13 and the feeder cable 18. Each of the output lines 11 is directly connected to the respective feeder cable 18, and the respective feeder cable 18 is directly connected to the primary side 15 of the respective transformer 17.

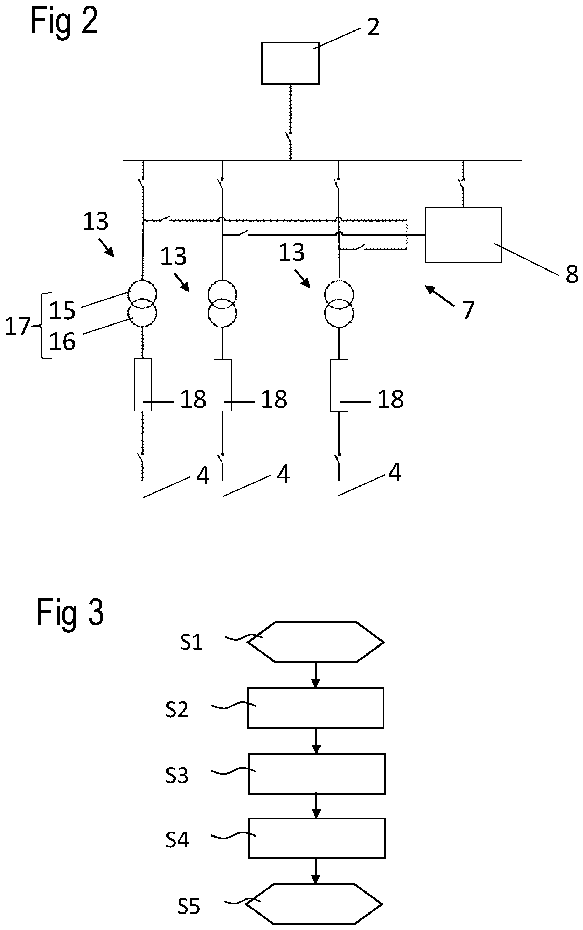

Each of the output lines 11 according to the exemplary embodiment of Figure 2 is connected to the feeder 13 between the circuit breaker 14 of the feeder 13 and the transformer 17. This means that the output lines 11 are directly adjacent to the circuit breaker 14 of the feeder 13 and the transformer 17, in contrast to Figure 1. Each of the output lines 11 is directly connected to the primary side 15 of the respective transformer 17, and the secondary side 16 of the respective transformer 17 is directly connected to the respective feeder cable 18.

According to the method stage S1 of the method for controlling a power distribution system 1, particularly shown in one of Figures 1 and 2, each circuit breaker 14 is operated, such that all circuit breakers 14 are in an opened state. Additionally, all further switches 12 and the switch 10 are operated to be opened. Being opened means that they are in a first state, preventing a current flow.

At this stage the circuit breaker 3 of the source 2 can be closed, e.g. being in a second state, and the circuit breaker 5 of the load 4 can be opened, e.g. being in a first state.

Subsequently, in method stage S2, the current limiting device 8 is connected to the power connection bus 6 by closing the switch 10. Being closed means that they are in a second state, allowing a current flow. This means that the current limiting device 8 and the power connection bus 6 are electrically conductively connected by closing the switch 10.

Subsequently, in method stage S3, one of the feeders 13 to be energized is connected to the current limiting device 8 by closing the corresponding further switch 12. In particular, exclusively one of the further switches 12 is closed, e.g. operated to be in the second state.

This means that the feeder 13, particularly exclusively one feeder 13, to be energized and the power connection bus 6 are electrically conductively connected via the respective output line 11 with the closed further switch 12, the current limiting device 8 and the input line 9 with the closed switch 10. Advantageously, an inrush current due to the initial energization is reduced by the current limiting device 8, efficiently protecting the respective transformer 17 of the respective feeder 13.

Subsequently, in method stage S4, the feeder 13 to be energized is connected to the power connection bus 6 by closing the corresponding circuit breaker 14. In particular, after a predetermined time delay, after the feeder 13 to be energized is connected to the current limiting device 8, the corresponding circuit breaker 14 is closed for electrically conductively connecting the respective feeder 13 with the power connection bus 6.

Subsequently, in method stage S5, the feeder 13 to be energized is disconnected from the current limiting device 8 by opening the further switch 12. Additionally, after opening the further switch 12, the switch 10 can be opened.

Exemplarily, the method can be repeated with a different feeder 13 to be energized for energizing a different load 4.

### Reference Signs

- 1: power distribution system
- 2: source
- 3: circuit breaker of the source
- 4: load
- 5: circuit breaker of the load
- 6: power connection bus
- 7: current limiting system
- 8: current limiting device
- 9: input line
- 10: switch
- 11: output line
- 12: further switch
- 13: feeder
- 14: circuit breaker of the feeder
- 15: primary side
- 16: secondary side
- 17: transformer
- 18: feeder cable

- S1..S5: method stages

## Claims

1. Current limiting system (7) for connecting a source (2) to at least two loads (4) by a power connection bus (6) and at least two feeders (13), comprising
- at least one current limiting device (8),
- an input line (9) connected to the current limiting device (8), and
- at least two output lines (11), each being connected to the current limiting device (8), wherein
- the input line (9) comprises a switch (10),
- each of the output lines (11) comprises a further switch (12),
- the input line (9) is configured to connect the power connection bus (6) and the current limiting device (8), and
- each of the output lines (11) is configured to be connected to one of the feeders (13) between a circuit breaker (14) and a primary side (15) of a transformer (17) of the corresponding feeder (13).

2. Current limiting system (7) according to claim 1, wherein
- the current limiting system (7) comprises exclusively one current limiting device (8).

3. Current limiting system (7) according to claim 1 or 2, wherein
- the current limiting device (8) is a magnetizing resistor.

4. Current limiting system (7) according to claim 1 or 2, wherein
- the current limiting device (8) is a magnetizing transformer (17).

5. Current limiting system (7) according to claim 1 or 2, wherein
- the current limiting device (8) is a magnetizing reactor.

6. Current limiting system (7) according to claim 1 or 2, wherein
- the current limiting device (8) is a power electronic converter.

7. Current limiting system (7) according to one of claims 1 to 6, wherein
- the switch (10) is a further circuit breaker, and/or
- each further switch (12) is a contactor.

8. Power distribution system (1) for connecting a source (2) to at least two loads (4), comprising
- a power connection bus (6) configured to be connected to the source (2),
- at least two feeders (13), each configured to be connected to one of the respective loads (4), and each of the feeders (13) being connected to the power connection bus (6) by a circuit breaker (14), and
- a current limiting system (7) with a current limiting device (8), comprising
- an input line (9) connected to the current limiting device (8), and
- at least two output lines (11), each being connected to the current limiting device (8), wherein
- the input line (9) comprises a switch (10), and
- each of the output lines (11) comprises a further switch (12), wherein
- the input line (9) connects the power connection bus (6) and the current limiting device (8), and
- each of the output lines (11) is connected to one of the feeders (13) between the circuit breaker (14) and a primary side (15) of a transformer (17) of the corresponding feeder (13) .

9. Power distribution system (1) according to claim 8, wherein
- a feeder cable (18) of at least one of the feeders (13) is connected to the primary side (15) of the corresponding transformer (17), and/or
- a feeder cable (18) of at least one of the feeders (13) is connected to a secondary side (16) of the corresponding transformer (17).

10. Power distribution system (1) according to claim 8 or 9, wherein
- at least one of the feeder cables (18) has a length of at least 1 m and at most 10 km.

11. Power distribution system (1) according to one of claims 8 to 10, wherein
- the source (2) is configured to be a public utility grid and/or a power electronic converter.

12. Method for controlling a power distribution system (1) according to one of claims 8 to 11, comprising:
- operating each circuit breaker (14), each further switch (12) and the switch (10) such that all circuit breakers (14), all further switches (12) and the switch (10) are in an opened state,
- connecting the current limiting device (8) to the power connection bus (6) by closing the switch (10),
- connecting one of the feeders (13) to be energized to the current limiting device (8) by closing the corresponding further switch (12),
- connecting the feeder (13) to be energized to the power connection bus (6) by closing the corresponding circuit breaker (14), and
- disconnecting the feeder (13) to be energized from the current limiting device (8) by opening the further switch (12) .

13. Method according to claim 12, further comprising: after disconnecting the feeder (13) to be energized from the current limiting device (8),
- disconnecting the current limiting device (8) from the power connection bus (6) by opening the switch (10).

14. Method according to claim 12 or 13, wherein
- the feeder (13) to be energized is connected to the power connection bus (6) after a predetermined time delay by the circuit breaker (14) of the respective feeder (13), after the feeder (13) to be energized is connected to the current limiting device (8).

15. Method according to one of claims 12 to 14, further comprising: before connecting one of the feeders (13) to be energized to the power connection bus (6) by closing the corresponding circuit breaker (14) of the feeder (13),
- determining a synchronism and amplitude matching between waveforms at the respective output line (11) of the current limiting device (8) and at the power connection bus (6), and
- adjusting a voltage amplitude, frequency and phase angle at the respective output line (11) dependent on the synchronism and amplitude matching for achieving synchronism with the voltage at the power connection bus (6).
